# EUROPEAN PATENT APPLICATION

(11) **EP 2 801 739 A2**
(43) Date of publication of application: **12.11.2014**
(21) Application number: 14167972.0
(22) Date of filing: 12.05.2014
(51) Int. Cl.: F16J 15/12

(54) **Gasket pressure sensor**

(30) Priority: 10.05.2013 US 201361821850 P
(71) Applicant: FOCE Technology International B.V., 6105 BN Maria Hoop (NL)
(72) Inventor: Schemmann, Marcel Franz Christian, 6105 BN Maria Hoop (NL); Ryan, Jason, 5504 BB Eindhoven (NL)
(74) Representative: Franzolin, Luigi

(57) **Abstract**

A system to measure forces on a gasket includes a gasket formed with an inner ring, an outer ring, and a winding disposed between the inner and outer rings, and at least one force sensor positioned perpendicular to the outer ring.

## Description

### PRIORITY

This application claims priority under 35 USC 119 to US application serial no. 61/821,850, filed on 5/10/2013, which is incorporated herein by reference in its entirety.

### BACKGROUND

The sealing and gasket industry would benefit from a low cost, pressure sensor enabled, gasket assembly capable of continuously reporting its state of integrity. This would essentially take the form of a 'smart gasket' in critical pipe-work infrastructure where continuous self monitoring can (a) facilitate compliance with maintenance and assurance requirements, (b) reduce the risk of environmental impact as a result of leakage, and (c) increase process efficiency due to reduction of downtime and leakage.

In inexpensive, microchip-scale pressure sensor based on compound semiconductor materials technology has been designed and miniaturized. This sensor may be physically as small as one millimeter square and ∼ 15 microns thick and offers reversible pressure measurement to loading of in excess of 50MPa. It is described in US patent 7,127,949B2, Contact pressure sensor and method for manufacturing, granted October 2006.

By altering the internal structure of the sensor chip, it can be made to suit various ranges of pressures, sensitivity and applications. In addition, it has the unique ability to continuously monitor pressure for an indefinite period. The initial application that has been identified is in the production of 'intelligent' industrial metallic gaskets where it is necessary to monitor the forces between pipe-work flanges.

### BRIEF DESCRIPTION OF DRAWINGS

FIGURE 1 illustrates an embodiment of a spiral wound steel gasket.
FIGURE 2 illustrates an embodiment of a stainless steel gasket with graphite sealing faces.
FIGURE 3 illustrates an embodiment of a force measurement sensor positioned at an outer edge of a spiral wound gasket.
FIGURE 4 illustrates an embodiment of a force measurement sensor positioned in an outer ring of a spiral wound gasket.
FIGURE 5 illustrates an embodiment of a force measurement sensor positioned at an outer edge of a spiral wound gasket.
FIGURE 6 illustrates an embodiment of a "kammprofile" (graphite faced) gasket with dual sensors oppositionally disposed on the outer ring.
FIGURE 7 illustrates an embodiment of a "kammprofile" (graphite faced) gasket with dual sensors oppositionally and offset disposed on the outer ring.
FIGURE 8 illustrates an embodiment of a spiral wound gasket with a force sensor in contact with an edge of the outer ring.
FIGURE 9 illustrates an embodiment of a spiral wound gasket with holes in the outer ring into which sensors may be placed.
FIGURE 10 illustrates an embodiment of a spiral wound gasket with markings located around the outer ring.

### DESCRIPTION

A sealing, high pressure, high temperature gasket for use in oil and gas applications is described comprising mechanical and electrical integration of the aforementioned sensor into an industry standard gasket without compromising mechanical sealing quality, and allowing extraction of electrical signals.

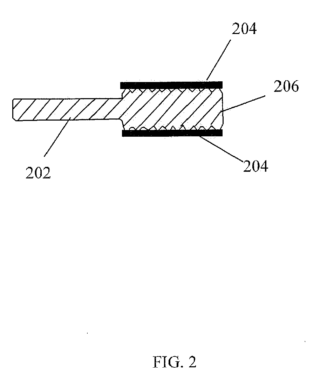

In one embodiment a stainless steel gasket with graphite sealing faces be may be chosen for integration with the sensor (See FIGURE 2). This solution may be implemented in different formats depending on the application.

A version of this gasket modified to integrate with a pressure sensor comprises similar graphite discs covering a two part steel disc. However, the graphite discs are modified to integrate with the sensor without compromising the seal quality and specifications, and without causing damage to the sensor insert under full pressure load.

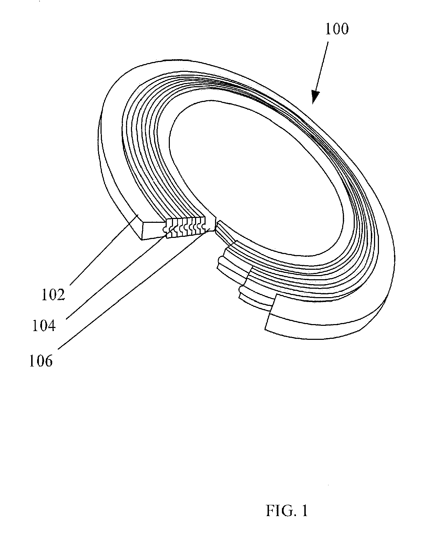

A second type of gasket is a strip of high grade metal, commonly stainless steel, wound in a spiral (known as the winding). This spiral is wound together with a "filler" strip such as PTFE, graphite, or a non-asbestos jointing, depending on the application (See FIGURE 1). It is between the windings and this outer ring or in the outer ring that a sensor is integrated with the gasket.

The sensor measure force on the winding of the gasket against the outer ring of the gasket due to squeezing of the winding between the flanges. The force measurement is perpendicular, the force of the spiral against the outer ring, by either a sensor in the ring, or a device that can measure pressure against the ring.

The pressure measurement may be facilitated by holes in the outer ring that permit small elastic deformation of the outer ring that can be measured. Pressure sensors may be mounted inside such holes, or at the inner edge of the outer ring at the interface to the spiral. Alternately markings may be available on the outer ring that facilitate measurement of deformation of the outer ring under pressure. The pressure exerted against the outer ring may be determined using ultrasonic measurement of the outer ring. Alternately, stiffness or deformation measurement of the outer ring may be used to estimate the pressure exerted against the outer ring by the spiral. Preferably the measurements are performed at multiple positions along the outer ring to determine if the gasket pressure is evenly distributed or not. In some embodiments, a permanent monitoring system may be installed to monitor the deformation of the outer ring, such as glass fiber based interferometry that measures a gap between a reference surface and a deformed surface with high accuracy.

The sensor signal may be exposed through the side of the gasket so as to not compromise the seal.

FIGURE 1 is an illustration of a spiral wound steel gasket 100 that may be modified to integrate with a pressure sensor as described herein. This spiral is wound together with a "filler" strip 104 such as PTFE, graphite, or a non-asbestos jointing, depending on the application. The spiral may have inner or outer guide rings 102, 106 to assist in installation, or to improve sealing performance. The winding is, for example, 4.5mm thick, compressing to about 3mm thick, with the guide rings at 3mm thickness. The windings of this 'spiral-wound' gasket, when placed between two flanges and under pressure, are squeezed by a force perpendicular to the disk and the outer ring 102 is provided as a compression limiting stop for the spiral that is being squeezed out.

FIGURE 2 is an illustration of a steel disc 202 with machined annular rings 206 and a graphite disc 204 on each face over the rings 206. When placed between two flanges and under pressure, the graphite 204 is squeezed into the annular rings 206 and a seal is affected.

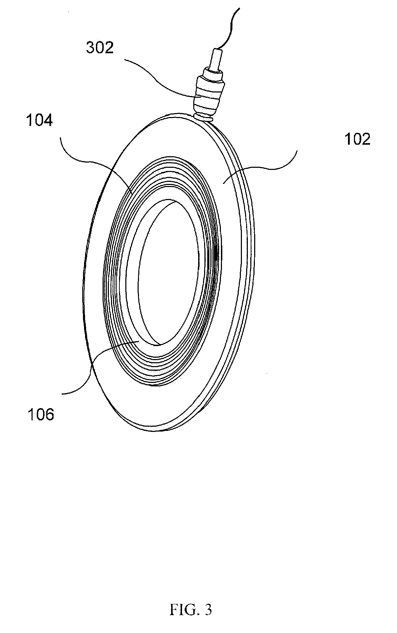

FIGURE 3 illustrates a force/pressure sensor 302 mounted to an outer edge of a spiral wound gasket. The gasket comprises windings 306, an inner ring 308, and an outer ring 304.

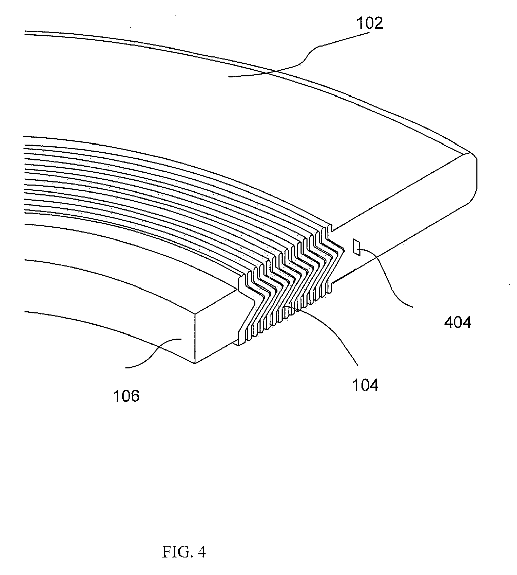

FIGURE 4 illustrates a force/pressure sensor 404 embedded within the outer ring 304 of a spiral wound gasket.

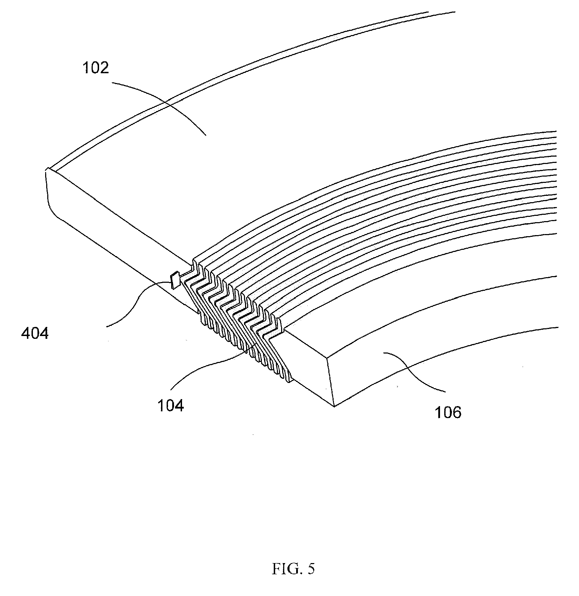

FIGURE 5 illustrates a force/pressure sensor 404 is embedded between the windings 104 and an outer ring 102 of a spiral wound gasket.

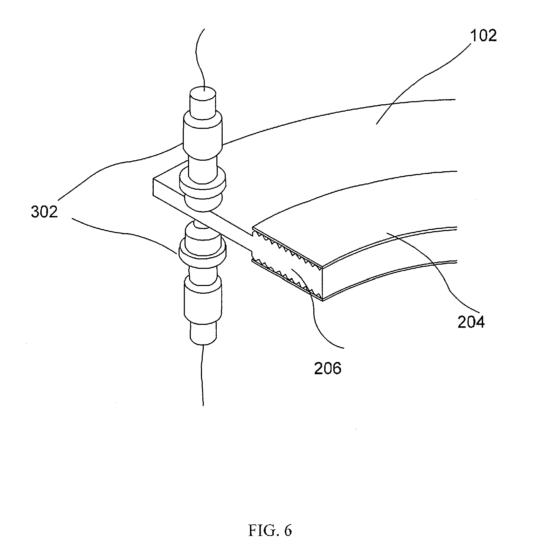

FIGURE 6 illustrates two force sensors 302 mounted in opposition to one another in contact with the outer ring 102. The sensors 302 do not contact the graphite sealing faces 204 of the gasket.

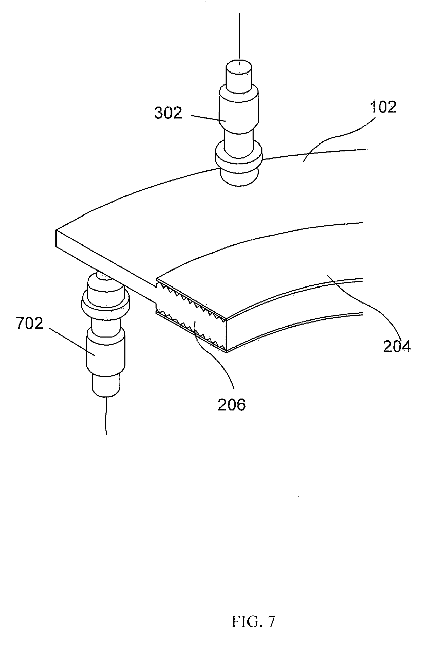

FIGURE 7 illustrates two force sensors (one a pulse device 702, the other a test device 302) mounted in opposition, but offset from one another, on the outer ring 102.

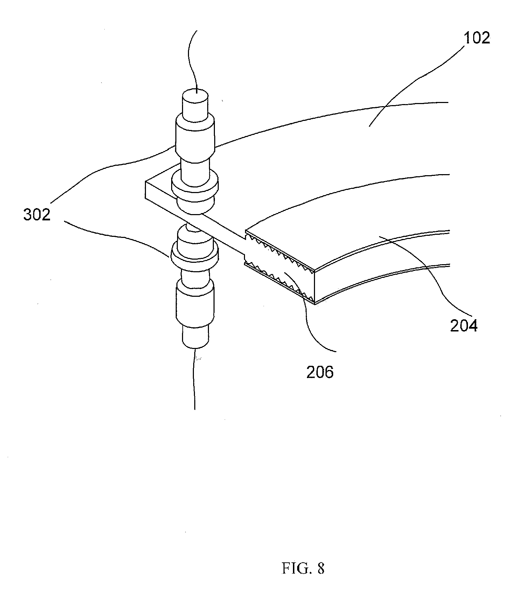

FIGURE 8 illustrates a force sensor and conical force measurement units located at points around the outer ring 102.

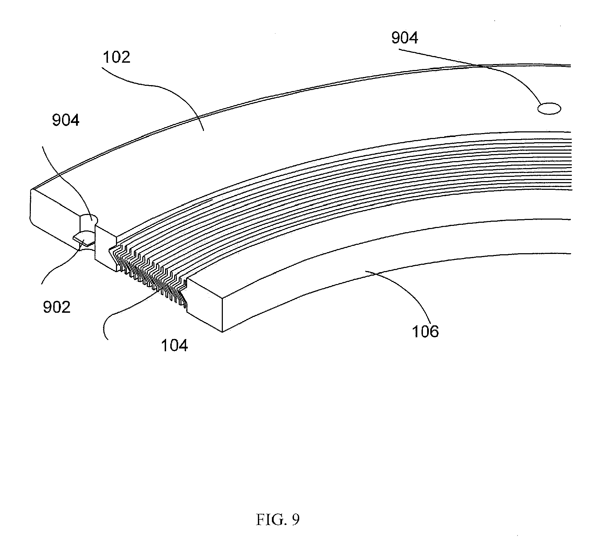

FIGURE 9 illustrates force/pressure sensors 902 placed into holes 904 formed around the gasket outer ring 102.

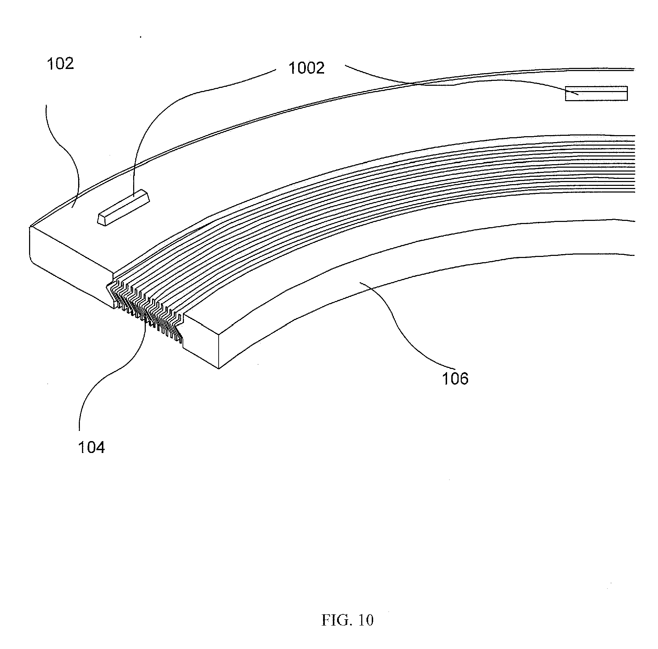

FIGURE 10 illustrates markings 1002 located around the outer ring 102.

## Claims

1. A system to measure forces on a gasket, comprising:
a gasket formed with an inner ring, an outer ring, and a winding disposed between the inner and outer rings; and
at least one force sensor positioned perpendicular to the outer ring.

2. The system of claim 1, the gasket comprising steel and the windings having a graphite coating.

3. The system of claim 1, comprising two force sensors mounted in opposition to one another and in contact with the outer ring.

4. The system of claim 1, comprising two force sensors mounted in opposition to one another and in contact with the outer ring, the sensors offset from one another, one sensor being a pulse device.
